# EUROPEAN PATENT APPLICATION

(11) **EP 1 677 500 A2**
(43) Date of publication of application: **05.07.2006**
(21) Application number: 05028648.3
(22) Date of filing: 29.12.2005
(51) Int. Cl.: H04M 1/725

(54) **Method for operating an application and mobile terminal used therefor**

(30) Priority: 29.12.2004 KR 2004115345
(71) Applicant: Samsung Electronics Co., Ltd., Suwon-si, Gyeonggi-Do (KR)
(72) Inventor: Park, Jin-Seok, Yeongtong-gu Suwon-si Gyeonggi-do (KR)
(74) Representative: Grünecker, Kinkeldey, Stockmair & Schwanhäusser Anwaltssozietät

(57) **Abstract**

Disclosed is a method for operating an application and a mobile terminal used therefor. A key input unit receives a key value to operate an application. A memory stores one or more applications and key values preset for the applications. A display unit displays a screen for operating the application in response to a key value input through the key input unit. A controller retrieves key values, preset for applications, including the key value input through the key input unit from the memory. The controller displays names of the applications mapped to the retrieved key values. When a key is input to operate a predetermined application among the applications of the displayed names, the controller operates the predetermined application.

## Description

The present invention generally relates to a mobile terminal, and more particularly to a method for operating an application and a mobile terminal used therefor.

Conventionally, in order to operate and/or access an application, mobile terminal users must access and manipulate a corresponding menu capable of operating the application . However, if the users cannot immediately locate the menu for operating the desired application, they are inconvenienced because they must manipulate keys many times in order to locate the menu.

It is, therefore, the object of the present invention to provide a method for conveniently operating an application and a mobile terminal used therefore.

This object is solved by the subject matter of the independent claims.

Preferred embodiments are defined in the dependent claims

The above and other aspects of the present invention can be achieved by a method for operating an application in a mobile terminal, including the steps of retrieving key values, preset for applications, including a key value input to operate an application; displaying names of the applications mapped to the retrieved key values; and operating a predetermined application when a key input is received to operate the predetermined application among the applications of the displayed names.

The above and other aspects of the present invention can also be achieved by a mobile terminal for operating an application, including a key input unit for receiving a key value to operate an application; a memory for storing applications and key values preset for the stored applications; a display unit for displaying a screen for operating the application in response to a key value input through the key input unit; and a controller for retrieving key values, preset for applications, including the key value input through the key input unit from the memory, displaying names of the applications mapped to the retrieved key values through the display unit, and operating a predetermined application when a key is input to operate the predetermined application among the applications of the displayed names.

The present invention will be more clearly understood from the following detailed description taken in conjunction with the accompanying drawings, in which:
FIG 1 is a block diagram illustrating a structure of a mobile terminal in accordance with a preferred embodiment of the present invention;
FIG 2 is a diagram illustrating an exemplary keypad of the mobile terminal of FIG 1 in accordance with a preferred embodiment of the present invention;
FIGS. 3 to 8 are diagrams illustrating exemplary screenshots displayed in a process for operating an application in accordance with a preferred embodiment of the present invention; and
FIG 9 is a flowchart illustrating the process for operating an application in accordance with a preferred embodiment of the present invention.

Preferred embodiments of the present invention will be described in detail herein below with reference to the accompanying drawings. In the following description, detailed descriptions of functions and configurations incorporated herein that are well known to those skilled in the art are omitted for clarity and conciseness.

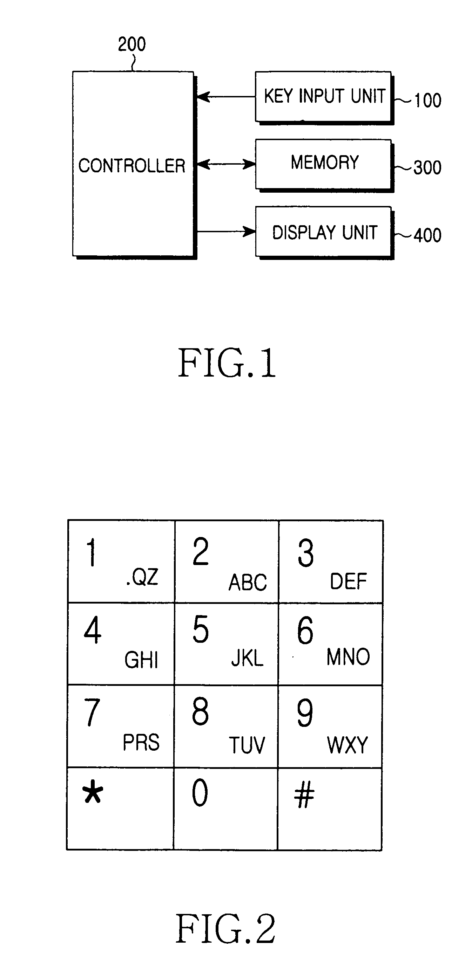

FIG 1 is a block diagram illustrating a structure of a mobile terminal in accordance with a preferred embodiment of the present invention.

A key input unit 100 of the mobile terminal receives a key value for operating an application and an operation key from a user, and provides the key value and the operation key to a controller 200. The key input unit 100 is provided with a keypad for receiving a key input from the user. The keypad will be described in more detail with reference to FIG 2.

FIG 2 is a diagram illustrating an exemplary keypad of the mobile terminal of FIG 1 in accordance with a preferred embodiment of the present invention.

As illustrated in FIG 2, the keypad is provided with the "*" and "#" buttons as well as 10 numeric keys for entering numerals which are required for dialing telephone numbers. Each of the 10 numeric keys is allocated at least one character, such that the user can input characters using the numeric keys. The keypad of FIG 2 is illustrated as an example of this embodiment. Of course, a keypad on which characters are arranged in a different form or language can be applied to the present invention.

A memory 300 stores applications and key values preset therefor. A key value preset for an application is a sequence of numbers allocated to the keypad's keys to be pressed to input characters corresponding to a name of the application.

For example, a text mail box is mapped to a key value of "833998624445552266699" preset for the text mail box application. To input the word "text", the user sequentially presses the "8", '3', "3", "9", "9" and "8" buttons arranged on the keypad of FIG 2. The next word "mail" can be input in the same way that the word "text" is input. When the word "text mail box" is input in the above-described way, the user must sequentially the "8", "3", "3", "9", "9", "8", "6", "2", "4", "4", "4", "5", "5", "5", "2", "2", "6", "6", "6", "9" and "9" buttons. A sequence of numbers mapped to the pressed buttons is a key value preset for the word "text mail box".

Under control of a controller 200, a display unit 400 displays a screen for operating an application in response to a key value input through the key input unit 100. The controller 200 retrieves key values, preset for applications, including the key value input through the key input unit 100 in an idle screen from a memory 300, and displays application names mapped to the retrieved key values on the display unit 400.

On the other hand, the controller 200 must determine if the key value input through the key input unit 100 in the idle screen is a phone number for making a phone call or a key value for operating an application in accordance with the present invention. When the key value input through the key input unit 100 is the key value for operating an application, the "*" or "#" character arranged on the keypad is used as an identifier for distinguishing the key value from the phone number. In this embodiment, it is assumed that the "#" character is used as the identifier.

For example, the user of the mobile terminal sequentially presses the "8", "3", "3", "9", "9" and "8" buttons and the "#" button to input the word "text" in the idle screen when operating the text mail box application. Then, the controller 200 moves to a screen for operating the application in accordance with a preferred embodiment of the present invention and displays the input key value of "833998" on the display unit 400. Then, the controller 200 retrieves preset key values including the key value of "833998" from the memory 300, and displays application names mapped to the retrieved key values on the display unit 400.

For example, the application names with the preset key values including the key value of "833998", i.e., the application names including the word "text", are "text slide", "text mail box", and "text message". That is, when the user sequentially presses the "8", "3", "3", "9", "9", "8" and "#" buttons, the controller 200 moves to the screen for operating an application and displays the input key value of "833998" on the display unit 400. Then, the controller 200 displays the application names with the preset key values including the key value of "833998", i.e., the words "text slide", "text message" and "text mail box", on the display unit 400.

Moreover, the controller 200 displays an increased key value according to a key additionally input through the key input unit 100 on the display unit 400. In response to the increased key value, the displayed application names are updated. For example, when the key value of "83398" is input, the application names with the preset values including the key value of "833998", i.e., the words "text slide", "text message" and "text mail box", and the key value of "833998" are displayed on the screen for operating the application. Then, when the user presses the "6" button, the controller 200 appends a key value of '6' to the previously input key value of "833998" and displays the increased key value of "8339986" on the display unit 400. Then, the controller 200 retrieves preset key values including the increased key value of "8339986" from the memory 300. Then, the controller 200 displays application names with the retrieved key values on the display unit 400.

For example, the application names with the preset key values including the increased key value of "8339986" are the word "text mail box" of "833998624445552266699" and the word "text message" of "8339986337777772433". On the other hand, before the key value is increased, the application names with the preset key values including "833998", i.e., the application names including the word "text", include the word "text slide" as well as the words "text mail box" and "text message". However, when the key value is increased from "833998" to "8339986", "833998777555444333" of the preset key value of the application name "text slide" does not include the increased key value of "8339986". According to the additionally input key, the controller 200 displays the application names "text mail box" and "text message" with the preset key values including the increased key value of "8339986" on the display unit 400, but does not display the application name "text slide" whose preset key value does not include the increased key value of "8339986".

When the user incorrectly inputs a key and an application mapped to the input key is absent, the controller 200 displays, to the user, a message indicating that the key has been incorrectly input through the display unit 400. When the controller 200 displays application names on a screen switched to operate an application, sequence numbers are also displayed. The user can select a desired application while viewing the application names displayed on the display unit 400 according to an input key value before a key value of the desired application to be operated is completely input. This method will be described below.

The controller 200 displays a key value input by the user through the key input unit 100 and application names mapped to the input key value on the screen -displayed to operate the application. Because a space for displaying the input key value is the space for allowing the user to input the key value on the screen for operating the application through the key input unit 100, the space for displaying the key value during the key input is an active area. Accordingly, the user can use a direction key provided in the keypad of the key input unit 100 to change the active area to a space for displaying the application names and vise versa.

When the controller 200 detects an input of the direction key for changing the active area to the space for displaying the application names, it changes the active area from the space for displaying the key value to the space for displaying application names. When the active area is changed to the space for displaying the application names, the user can view the application names and sequence numbers thereof and then press a number key corresponding to a sequence number of an application to be operated through the keypad of the key input unit 100. When a predetermined number key of the keypad of the key input unit 100 is pressed in a state in which the active area has been changed to the space for displaying the application names, the controller 200 operates an application of a sequence number corresponding to a detected number key.

Moreover, in a state in which the active area has been changed from the space for displaying the key value to the space for displaying the application names, the user can position a cursor on a desired (i.e., selected) application name using a direction key (e.g., A, ►, ▼, ◄, etc.) and then presses an OK (or enter) key provided in the keypad, thereby operating an application of the application name. When detecting the pressed OK key, the controller 200 operates the selected application.

In an alternative embodiment, when the key value is input in the screen for operating the application through the key input unit 100, the input key value is not displayed, but rather, only application names with the preset key values including the input key value. This method will now be described in detail below.

The method for displaying only application names mapped to a key value input through the key input unit 100 in the idle screen depends upon an initial input of the "#" character set as the identifier. For example, the user presses the "#" button before inputting a key value through the key input unit 100 such that the text mail box application can be operated. The controller 200 initially detects the input of the "#" button from the idle screen, thereby moving to a screen for operating an application in accordance with the present invention. When a key value is input through the key input unit 100 after a change to the screen for operating an application is made, the controller 200 does not display the input key value on the display unit 400. When the user inputs a key value through the key input unit 100 to operate an application, the controller 200 retrieves key values, preset for applications, including an input key from the memory 300 whenever a key is input. Then, the controller 200 displays application names mapped to the retrieved key values on the display unit 400.

For example, after the change to the screen for operating an application is made in response to an initial input of the "#" button in the idle screen, a key value of "833998" is input through the key input unit 100 and application names with preset key values including the key value of "833998", i.e., the words "text slide", "text message" and "text mail box", are displayed on the display unit 400. Then, when the user presses the "6" button, the controller 200 appends the key value of "6" to the previously input key value of "833998" and then retrieves preset key values including an increased key value of "8339986" from the memory 300. Then, the controller 200 displays application names mapped to the retrieved key values on the display unit 400.

Because application names mapped to the key value input through the key input unit 100 are only displayed on the display unit 400, the user does not need to change the active area to operate an application. In a state in which the application names mapped to the key value input through the key input unit 100 are displayed on the display unit 400, the controller 200 basically positions the cursor on a predetermined application name, i.e., the first displayed application name. Without changing the active area to view application names displayed on the display unit 400 and select a desired application, the user can then position the cursor on a name of the desired application and then press the OK key, thereby operating the desired application.

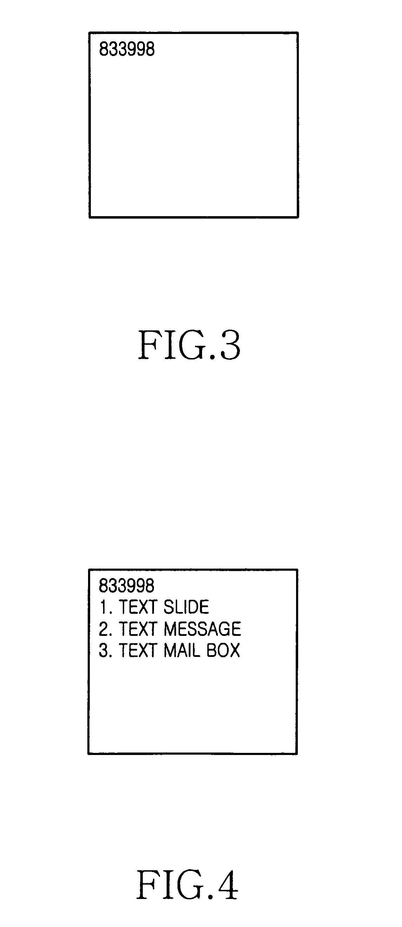

The method for operating an application as described above will be described in more detail with reference to FIGs. 3 to 8. When the user of the mobile terminal sequentially presses buttons of the keypad of FIG 2, thus inputting characters corresponding to the application name such as "text mail box" (to operate the text mail box applications) in the idle screen, a key value of numbers are provided to the controller 200 and the key value is displayed on the display unit 400. First, the user sequentially presses the "8" "3", "3", "9", "9" and "8" buttons and the "#" button to input the word "text". In this case, the resulting screen is illustrated in FIG 3.

Then, the controller 200 detects the input of the "#" button, and determines that the input is intended to operate an application. Then, the controller 200 retrieves preset key values including the key value of "833998" from the memory 300. Application names with preset key values including the key value of '833998' are the words "text slide", "text message" and "text mail box". When the preset key values including the key value of "833998" are retrieved from the memory 300, the controller 200 moves to a screen for operating an application. Then, the controller 200 displays the key value of "833998" input in the idle screen, the application names with the preset key values including the key value of "833998", i.e., the words "text slide", "text message" and "text mail box", and sequence numbers thereof on the display unit 400 as illustrated in FIG 4.

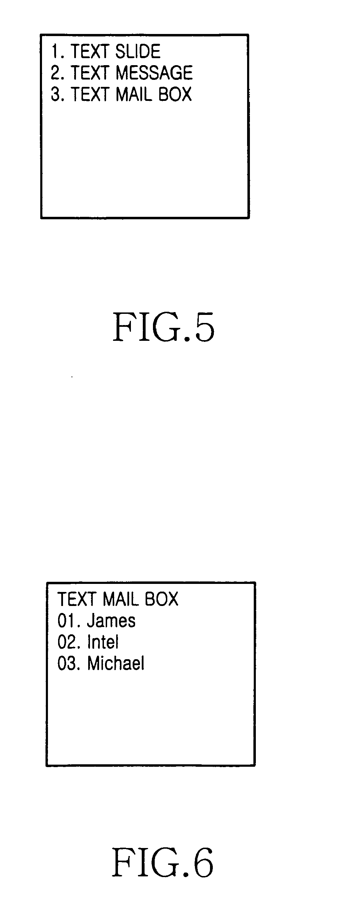

On the other hand, when the user initially presses the "#" button in the idle screen, the controller 200 senses the initial input of the "#" button and moves to the screen for operating an application. When the user inputs the key value of "833998" to operate the text mail box application corresponding to the word "text mail box" in a state in which a change to the screen for operating an application has been made, the controller 200 does not display the key value of "833998". Then, the controller 200 displays the application names with the preset key values including the key value of "833998", i.e., the words "text slide", "text message" and "text mail box", and sequence numbers thereof on the display unit 400 as illustrated in FIG 5. When the screen of FIG 4 is compared with that of FIG 5, it can be found that the input key value of "833998" is not displayed on the screen of FIG 5.

In a state in which the screen of FIG 4 has been displayed on the display unit 400, the user can select the text mail box application corresponding to the word "text mail box" while viewing the application names displayed on the display unit 400 according to an input key value without inputting a complete key value of a desired application to be operated. Using a direction key, the user can change the active area from a space for displaying the key value of "833998" to a space for displaying the application names. When the controller 200 detects an input of a direction key for changing the active area to the space for displaying application names, the active area is changed from the space for displaying the key value of"833998" to the space for displaying the application names.

When the active area is changed to the space for displaying application names, the user can press the "3" key corresponding to a sequence number of the word "text mail box" using the keypad of FIG 2. When the controller 200 detects that the "3" button of the keypad is pressed in a state in which the active area has been changed to the space for displaying the application names, it operates an application of the text mail box corresponding to the word "text mail box" and displays an executable screen of the text mail box application on the display unit 400 as illustrated in FIG 6.

In a state in which the active area has been changed from the space for displaying the key value to the space for displaying the application names, the user positions a cursor on the application name "text mail box" using a direction key and then presses the OK key provided in the keypad, thereby operating an application of the application name "text mail box". When detecting the pressed OK key, the controller 200 operates the text mail box application corresponding to the application name "text mail box" on which the cursor is currently being positioned. As illustrated in FIG 6, the executable screen of the text mail box application is displayed on the display unit 400.

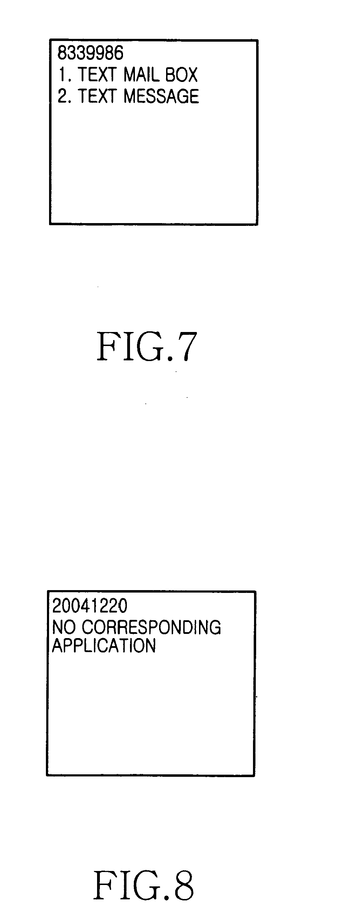

When the user presses the "6" button without operating an application in a state in which the screen as illustrated in FIG 4 has been displayed, the controller 200 adds a key value of '6' to the previously input key value of "833998" and displays an increased key value of "8339986" on the display unit 400. Then, the controller 200 retrieves preset key values including the increased key value of "8339986" from the memory 300. As a result of retrieving preset key values including the increased key value of "8339986" from the memory 300, the preset key values of the application names "text mail box" and "text message" are retrieved. As illustrated in FIG 7, the application names "text mail box" and "text message" and sequence numbers thereof are displayed together.

When FIG 4 is compared with FIG 7, it can be found that "1.Text Slide" illustrated in FIG 4 is not displayed on the screen of FIG 7. The preset key value of the application name "text slide" corresponding to one of the application names displayed on the display unit 400 according to the previously input key value of "833998" is "833998777555444333". Because the preset key value of the application name "text slide" does not include the increased key value of "8339986", '1.Text Slide' displayed on the screen of FIG 4 is not displayed on the screen of FIG 7.

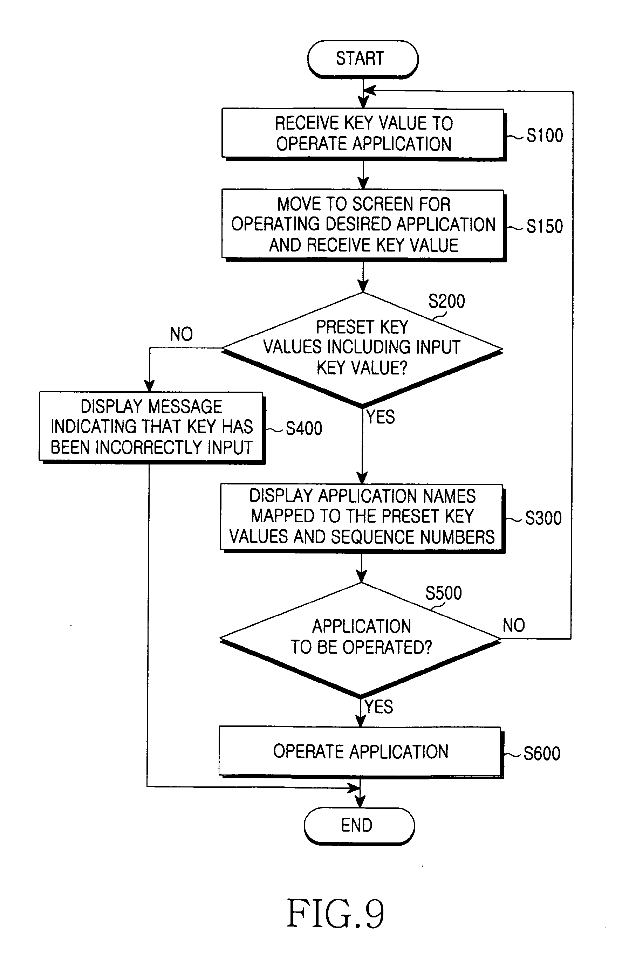

When the user inputs a key and an application mapped to the input key is absent, the controller 200 displays, to the user, a message (e.g., "No Corresponding Application. Please Retry) for indicating that the key has been incorrectly input through the display unit 400 as illustrated in FIG 8. Now, the process for operating an application according to an input key value in the mobile terminal of FIG 1 in accordance with a preferred embodiment of the present invention will be described with reference to the flowchart of FIG 9. FIG 9 is a flowchart illustrating the process for operating an application in accordance with a preferred embodiment of the present invention. When the user of the mobile terminal inputs characters corresponding to an application name to operate a desired application in the idle screen, the user can sequentially press associated buttons of the keypad of FIG 2 or can press the "#" button before a key value of the desired application is input. When the controller 200 determines whether the "#" button has been initially pressed in the idle screen or the "#" button is not initially pressed in the idle screen but is pressed after a predetermined key value is input. (Step S100) The controller 200 moves to a screen for operating the desired application when the "#" button has been initially pressed in the idle screen or when the "#" button is not initially pressed in the idle screen but is pressed after the predetermined key value is input. (Step S 150) At this time, when it moves to the screen for operating the desired application by initially pressing the "#" button, the controller 200 does not display the key value inputted after the "#" button is pressed on the display unit 400. And, when it moves to the screen for operating the desired application by pressing the "#" button after the predetermined key value is input, the controller 200 displays the key value input in the idle screen and a subsequent key value on the display unit 400.

In a state in which the controller 200 has moved to the screen for operating the desired application, the controller 200 retrieves preset key values including an input key value from the memory 300 whenever a key value is input (Step S200). When the preset key values including the input key value are retrieved from the memory 300, the controller 200 displays application names mapped to the preset key values and sequence numbers thereof on the display unit 400 (Step S300). However, in Step 200, when a preset key value including the input key value cannot be retrieved from the memory 300, the controller 200 displays, to the user, a message indicating that a key has been incorrectly input (or that "No Corresponding Application Exits, Please Retry," or otherwise as desired) through the display unit 400 (as illustrated in FIG 8) (Step S400).

On the other hand, the user identifies application names displayed on the display unit 400 in step S300 and selects a desired application or inputs a sequence number through the key input unit 100 such that the application can be operated. The controller 200 determines if the user has input a key for operating the application through the key input unit 100 (Step S500).

If the user has input the key for operating the application as a result of the determination, the controller 200 operates an application selected by the cursor or an application of a sequence number corresponding to an input key number (Step S600). However, if a key for operating the application has not been input, the controller 200 proceeds to step S 100 to continuously receive a key value for operating the application and then performs steps S200 to S600.

As is apparent from the above description, the present invention can operate an application on the basis of a key value input in an idle screen and provide the convenience of use by allowing a user to immediately operate a desired application through an application name.

Moreover, the present invention can provide a user interface for allowing users, familiar with the keypad, to easily and conveniently operate an application.

Although preferred embodiments of the present invention have been disclosed for illustrative purposes, those skilled in the art will appreciate that various modifications, additions, and substitutions are possible, without departing from the scope of the present invention. Therefore, the present invention is not limited to the above-described embodiments, but is defined by the following claims.

## Claims

1. A method for operating an application in a mobile terminal, comprising the steps of:
retrieving key values, preset for applications, corresponding to at least part of an input key value, the preset key valves being used to operate an application;
displaying names of the applications mapped to the retrieved preset key values; and
operating a predetermined application when a key input is received to operate the predetermined application from among the applications corresponding to the displayed names.

2. The method of claim 1, wherein a key value preset for the application includes a sequence of numbers corresponding to characters defining a name of the application.

3. The method of claim 1 or 2, further comprising the step of:
retrieving key values, preset for applications, including an increased key value according to an additionally input key.

4. The method of one of claims 1 to 3, further comprising the step of:
determining if a preset identifier has been input to distinguish a key value input to operate the application from a number input to make a phone call.

5. The method of claim 4, further comprising the steps of:
entering a preset identifier; and
detecting a key value, if the preset identifier has been input.

6. The method of claim 5, wherein the step of entering the present identifier is performed before or after inputting the input key value.

7. The method of one of claims 1 to 6, further comprising the step of:
displaying, a message indicating that a key has been incorrectly input if a preset key value corresponding to an input key value is not retrieved.

8. The method of one of claims 1 to 7, further comprising the steps of:
displaying the names of the applications mapped to the retrieved preset key values along with a unique sequence number for each displayed of the names;
changing an active area from a space for displaying the input key value to a space for displaying the application names in response to an input of a direction key; and
operating an application corresponding to a displayed sequence number when a key corresponding to the sequence number is input.

9. The method of claim 8, further comprising the step of:
operating an application mapped to a predetermined application name when the predetermined application name is selected using a the direction key in a state in which the active area has been changed to the space for displaying the application names.

10. A mobile terminal for operating an application, comprising:
a key input unit for receiving an input key value to operate an application;
a memory for storing applications and preset key values for the applications;
a display unit for displaying a screen for operating the application in response to an input key value, the input key value being input through the key input unit; and
a controller for:
receiving the input key value and retrieving the corresponding preset key values, preset for applications, from the memory
displaying names of the applications mapped to the retrieved preset key values, and
operating a selected application when a key is input to select the application from among the displayed names of applications.

11. The mobile terminal of claim 10, wherein after an additional key input, the controller increases the key value and retrieves preset key values, preset for applications, corresponding to the increased key value.

12. The mobile terminal of claim 10 or 11, wherein the controller determines if a preset identifier has been input to distinguish an input key value input to operate the application from a number input to make a phone call.

13. The mobile terminal of claim 12, wherein the controller detects an input key value, input through the key input unit as a key value for operating an application if the preset identifier has been input.

14. The mobile terminal of one of claims 10 to 13, wherein the controller displays, using the display unit, a message indicating that a key has been incorrectly input when a preset key value, preset for an application, including corresponding to an input key value is not retrieved from the memory.

15. The mobile terminal of one of claims 10 to 14, wherein the controller:
displays the names of the applications mapped to the retrieved preset key values along with corresponding sequence numbers through the display unit;
changes an active area from a space for displaying the input key value to a space for displaying the application names in response to an input of a key direction key to operate the application; and
operates an application corresponding to a displayed sequence number when a key corresponding to the sequence number is input.

16. The mobile terminal of claim 15, wherein the controller operates an application mapped to a predetermined application name when the predetermined application name is selected using a direction key in a state in which the active area has been changed to the space for displaying the application names.
